# EUROPEAN PATENT APPLICATION

(11) **EP 2 159 431 A1**
(43) Date of publication of application: **03.03.2010**
(21) Application number: 09252083.2
(22) Date of filing: 27.08.2009
(51) Int. Cl.: F16B 27/00

(54) **Screw coupling strip used in a continuous screw tightening machine**

(30) Priority: 01.09.2008 JP 2008223004
(71) Applicant: Pias Sales Co., Ltd., Osaka (JP)
(72) Inventor: Shinjo, Kimio, Osaka (JP)
(74) Representative: Price, Paul Anthony King

(57) **Abstract**

To present a screw coupling strip having a drill screw and a seal washer assembled in a screw holding belt, capable of tightening the screw by using an existing screw holding belt assembling only the drill screw and an existing continuous screw tightening machine, in which the screw holding belt has enough size and strength for allowing to pass the screw head part. A screw coupling strip 1 includes a screw holding belt 2 having intermittent feed notches 22 provided at specified pitches along the lateral edge of a belt main body 21 made of a belt-like body of synthetic resin, and having screw holding parts 23 provided at same pitches as the intermittent feed notches 22 in the longitudinal direction of the belt main body 21, a drill screw 3 having a screw shaft part 31 inserted in the screw holding parts 23, and having a screw head part 33 held passably in the screw holding parts 23, and a washer 4 assembled in the screw shaft part 31 inserted in the screw holding parts 23, in which the holding belt 2 is disposed between the screw head part 33 and the washer 4.

## Description

### BACKGROUND OF THE INVENTION

### 1. Field of the Invention

The present invention relates to a screw coupling strip assembled in a screw holding belt at a specified pitch and used in a continuous screw tightening machine, and more particularly to a screw coupling strip having a drill screw, and a seal washer (known as bonded washer) having a sealing member adhered to a metal washer, both assembled in a screw holding belt.

### 2. Background Art

Drill screws are often used for fixing a roofing material or an outer wall material made of a thin metal plate to a support member such as column or beam of steel structure such as steel house or metal building.

Such drill screws for outdoor applications are drill screws assembling a seal washer (known as bonded washer) having a sealing member of rubber or neoprene adhered to a metal washer, in order to prevent invasion of rainwater. Such drill screw with seal washer is known to include a screw coupling strip assembled in a screw holding belt made of synthetic resin at a specified pitch so that the screw may be tightened continuously by using a continuous screw tightening machine (see, for example, patent document 1 and patent document 2).

However, such conventional screw coupling strip is large in the diameter of the seal washer, and it is difficult to pass the seal washer from the screw holding belt in the screw tightening process by the continuous screw tightening machine, and especially in the process of drilling a metal plate by rotating the drill screw at high speed, various problems have been known such as frictional heat occurring between the seal washer and the screw holding belt to wear out the seal member of the seal washer, or thermal deformation of the screw holding belt made of resin to cause troubles in pitch feeding of the screw holding belt and pushing and passing of the seal washer. To eliminate such problems, it has been hitherto attempted to increase the width and thickness of the screw holding belt, use a belt of a reinforced structure, or employ a cassette type of larger rigidity, but the belt weight is increased, and the continuous tightening machine is increased in size and weight, and it is not suited to field works.
Patent document 1: Japanese Patent Publication No. 2880703
Patent document 2: Japanese Patent Application Laid-Onen No. 2003-336614

### SUMMARY OF THE INVENTION

Thus, there is a need for a screw coupling strip having a drill screw and a seal washer assembled in a screw holding belt, capable of tightening the screw by using an existing screw holding belt assembling only the drill screw and an existing continuous screw tightening machine, in which the screw holding belt has enough size and strength for allowing to pass the screw head part.

In one aspect, the present invention provides a screw coupling strip for use in a continuous screw tightening machine, comprising a screw holding belt having intermittent-feed notches provided at specified pitches (e.g. regular intervals) along a lateral edge of a belt main body comprising a belt-like body made of synthetic resin and having screw holding parts provided at the same pitches (intervals) as the intermittent-feed notches in the longitudinal direction of the belt main body, a plurality of drill screws each having a screw shaft part inserted in a respective one of the screw holding parts and a screw head part arranged to pass through the respective screw holding part, and a washer assembled on each screw shaft part, with the holding belt being disposed between the screw head part and the washer.

When using an existing continuous screw tightening machine, an interval (gap) for allowing the screw coupling strip to pass through a belt guide part of the continuous screw tightening machine may be provided between the downside (bottom surface) of the screw holding belt and the washer. However, the washer may be assembled adjacently to the downside of the screw holding belt so far as there is no problem for passing the screw coupling strip into the belt guide part of the continuous screw tightening machine.

When using the screw coupling strip, only the drill screw is inserted and held in the screw holding part of the screw holding belt, and the washer itself is assembled on the screw shaft part of the drill screw at the downside of the screw holding belt, and therefore the drill screw is rotated at high speed by the continuous screw tightening machine provided with the screw holding belt, and a hole is drilled in a metal plate of a work member, and the screw tightening operation is started, and the screw head part passes by penetrating through the screw holding part, and the washer positioned at the downside of the screw holding belt is pressed and tightened to the metal plate by the screw head part. Therefore, the screw holding belt is enough to have size and strength for allowing easy passing of the screw head part, and by using the screw holding belt provided only with the existing drill screw, and the existing continuous screw tightening machine conforming to the existing screw holding belt, it is possible to tighten easily the drill screw having a washer of a large diameter.

The present invention is particularly applicable to a screw tightening strip having a seal washer (known as bonded washer) having a sealing member adhered to a metal washer assembled in a drill screw.

### BRIEF DESCRIPTION OF DRAWINGS

Fig. 1 is a plan view of a screw coupling strip according to the present invention.
Fig. 2 is a partial longitudinal sectional front view of the screw coupling strip.
Fig. 3 is a part lateral sectional plan view showing the state of use having the screw coupling strip of the present invention assembled in a continuous screw tightening machine.
Fig. 4 is a part longitudinal sectional front view of the same.
Fig. 5 is a part longitudinal sectional side view of the same.
Fig. 6 is an explanatory diagram of screw tightening processes by the continuous screw tightening machine, in which (a) shows a starting state having the driver bit engaged with the screw head part, (b) shows a process of drilling a hole in the drill screw passing through the screw holding belt, and (c) shows a completed state of screw tightening by the drill screw.
Fig. 7 is a part lateral sectional plan view showing the state of use having the screw coupling strip in other preferred embodiment of the present invention assembled in a continuous screw tightening machine.
Fig. 8 is a part longitudinal sectional front view of the same.
Fig. 9 is a part longitudinal sectional side view of the same.

### DETAILED DESCRIPTION OF THE INVENTION

Referring now to the drawings, preferred embodiments of the present invention are specifically described below.

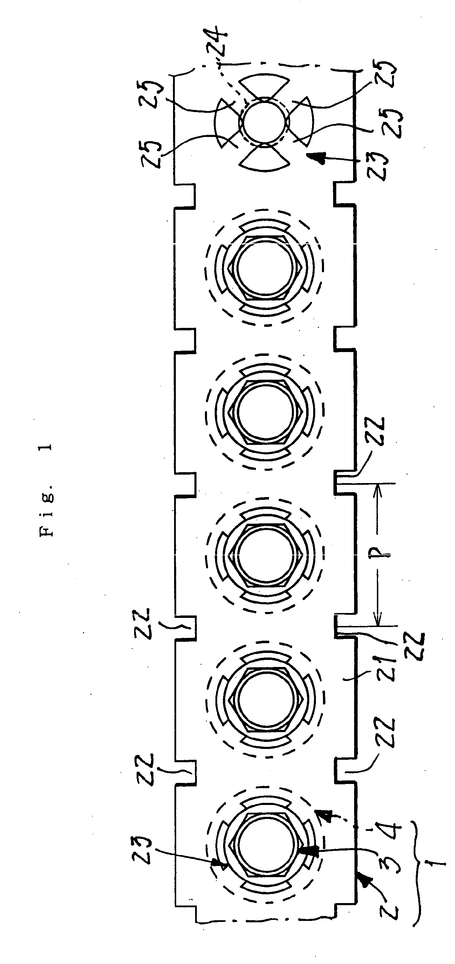

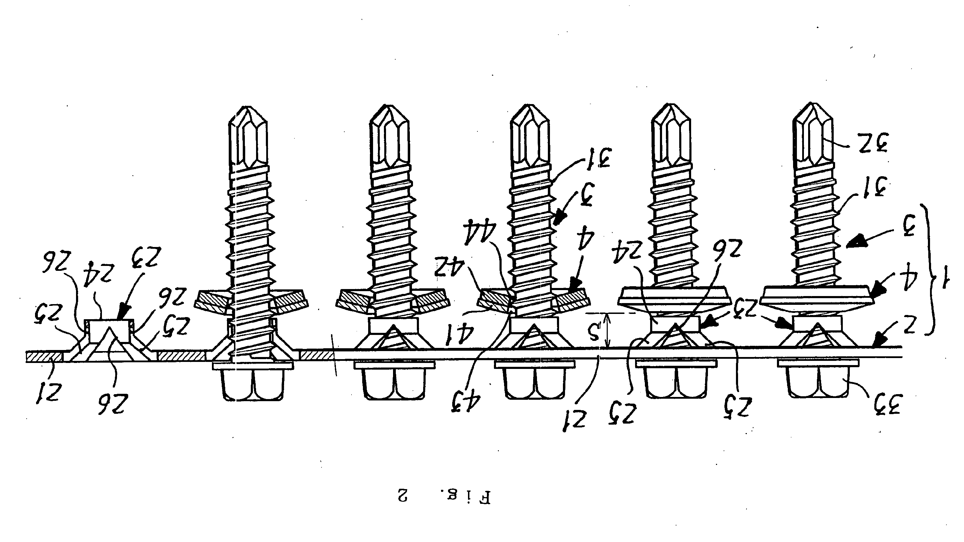

Fig. 1 and Fig. 2 show the screw coupling strip of the present invention, and the screw coupling strip 1 is composed of a screw holding belt 2, a drill screw 3, and a seal washer 4.

The screw holding belt 2 has intermittent feed notches 22 provided at specified pitches P along both lateral edges of a belt main body 21 made of a belt-like body of synthetic resin such as polypropylene or polyethylene, and has screw holding parts 23 provided at same pitches as the intermittent feed notches 22 in the longitudinal direction of the belt main body 21. The screw holding part 23 is formed of a short tubular part 24 for inserting and holding a screw shaft part 31 of the drill screw 3 and four support pieces 25 for supporting the tubular part 24, and the four support pieces 25 are disposed in an X-figure crossing 45 degrees to the axial line in the longitudinal direction of the belt main body 21, and are protruded to the downside of the belt main body 21 by forming a contour shape of a circular truncated cone, with the lower end parts coupled to the tubular part 24. At the adjacent position to each support piece 25 coupled to the tubular part 24, a breaking notch 26 for breaking the tubular part 24 easily is provided. The inside diameter of the tubular part 24 is slightly smaller than the outside diameter of the screw shaft part 31.

In the drill screw 3, the leading end of the screw shaft part 31 is consecutively provided with a drill part 32, and the rear end part has a screw head part 33 of a hexagonal head capable of withstanding a strong tightening torque.

The seal washer 4 has a seal member 42 of rubber or neoprene or the like adhered to a metal washer 41, and is also called a bonded washer, and has a high sealing performance. The diameter of a mounting hole 43 of the metal washer 41 is formed slightly larger than the outside diameter of the screw shaft part 31 of the drill screw 3, and the diameter of a mounting hole 44 of the seal member 42 is formed slightly smaller than the screw diameter of the screw shaft part 31, so that the seal washer 4 assembled in the screw shaft 31 is stopped and held by way of the seal member 42.

In the screw holding belt 2 having such configuration, the screw shaft part 31 of the drill screw 3 is inserted into the tubular part 24 of each screw holding part 23, until the screw head part 33 abuts against the upside of the belt main body 21, and then the drill screw 3 is assembled into the screw holding belt 2, and the seal washer 4 is assembled into the screw shaft part 31 inserted into the screw holding part 23, and is stopped and held by the screw shaft part 31 by the elastic restoring force of the seal member 42, so that the screw coupling strip 1 shown in Fig. 1 and Fig. 2 is completed. At this time, between the downside of the screw holding belt 2 and the seal washer 4, a certain gap S (see Fig. 2) is formed. This gap S is necessary for preventing interference of seal washer 4 with the belt guide part when the screw holding belt 2 passes through the belt guide part, when using the screw coupling strip 1 by installing in the continuous screw tightening machine as mentioned below. In the process of assembling the drill screw 3 into the screw holding belt 2, the seal washer 4 may be disposed beneath the tubular part 24 of the screw holding part 23, and the screw shaft part 31 of the drill screw 3 can be inserted into the tubular part 24, and the seal washer 4 may be simultaneously assembled into the screw shaft part 31.

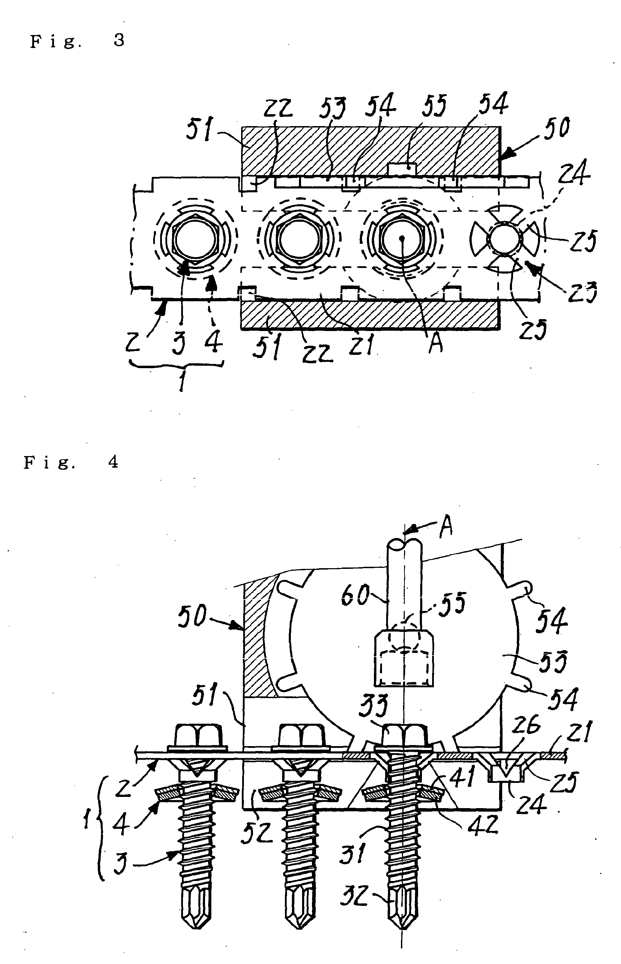

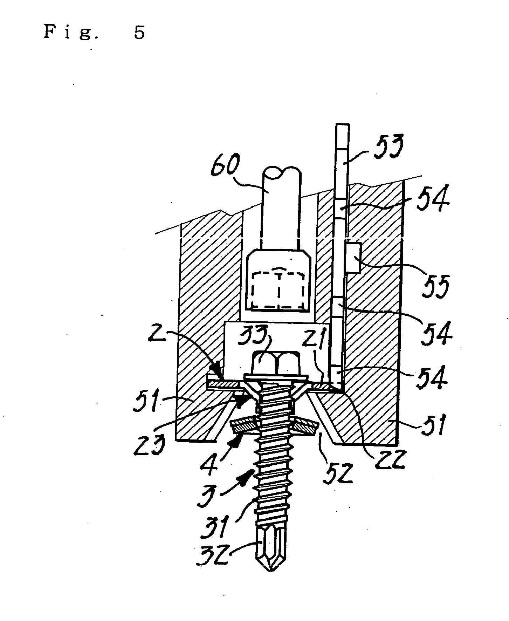

Fig. 3 to Fig. 5 show the state of use of the screw coupling strip 1 having such configuration being assembled in a continuous screw tightening machine. A belt guide 50 of the continuous screw tightening machine has a pair of guide parts 51, 51 for guiding and moving by supporting both lateral edges of the belt main body 21 of the screw holding belt 2, and a space passage 52 for passing and moving the drill screw 3 is provided between the both guide parts 51, 51, and this space passage 52 is formed to spread downward. Along one guide part 51, an intermittent feed ratchet 53 is disposed. The intermittent feed ratchet 53 is provided with a plurality of feed pawl 54 formed radially across specified intervals on the outer circumference, and rotates by every specific angle around a rotary shaft 55, so that the feed pawls 54 are engaged with the intermittent feed notches 22 of the belt main body 21, and thereby the screw holding belt 2 is fed intermittently by every specified pitch P. By this intermittent feed motion, the drill screw 3 assembled in the screw holding belt 2 is sequentially transferred to the screw tightening position A (see Fig. 3 and Fig. 4). At this time, since the space passage 52 is formed to spread downward, and a specific gap S is provided between the downside of the screw holding belt 2 and the screw shaft part 31 of the drill screw 3, the seal washer 4 does not interfere with the both guide parts 51, 51 when the drill screw 3 is moved.

On the other hand, on the axial line of the drill screw 3 transferred to the screw tightening position A, a driver bit 60 movable back and forth in the axial direction is disposed by penetrating through the belt guide 50.

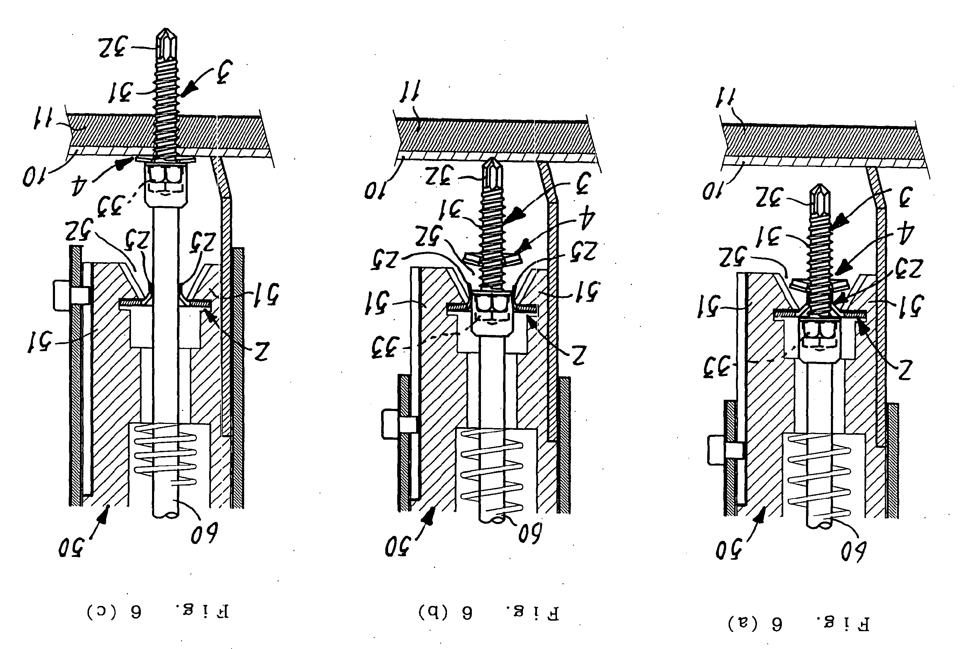

Fig. 6 shows the processes of tightening the screw by installing the screw coupling strip 1 in the continuous screw tightening machine First, as shown in Fig. 6 (a), the driver bit 60 is engaged with the screw head part 33 of the drill screw 3, and pushes down the drill screw 3 while rotating at high speed. Next, as shown in Fig. 6 (b), the drill part 32 starts hole drilling in a roofing material 10 which is a member to be tightened with, and the tubular part 24 of the screw holding part 23 is broken along the breaking notch 26 by the pressing force of the screw head part 33, and the screw head part 33 tears apart the four support pieces 25, and passes through the screw holding belt 2. Further, as shown in Fig. 6 (c), the drill screw 3 is pushed down, and the seal washer 4 positioned at the lower side of the belt main body 21 is pressed to the roofing material 10 by the screw head part 33, and the drill screw 3 is driven into the roofing material 10 and the support member 11.

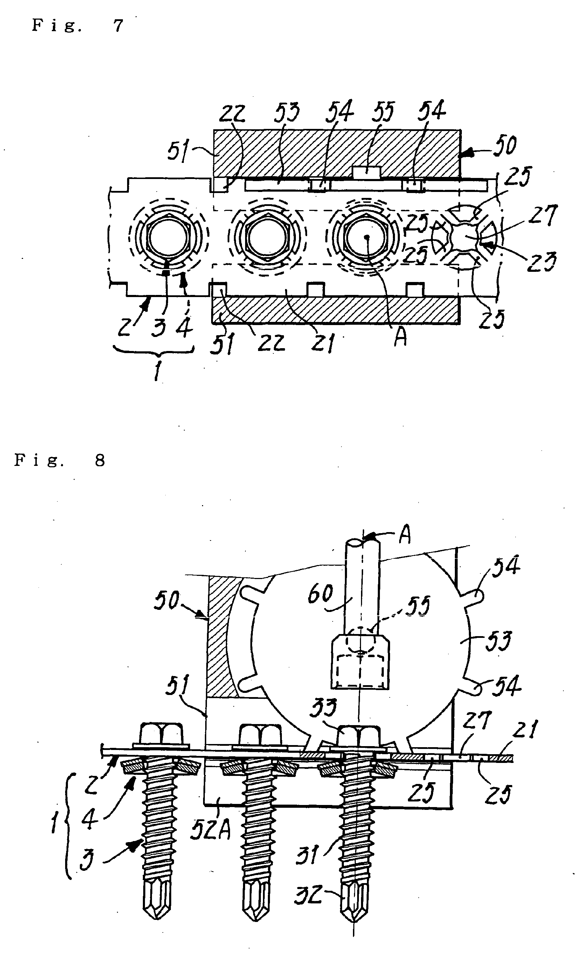

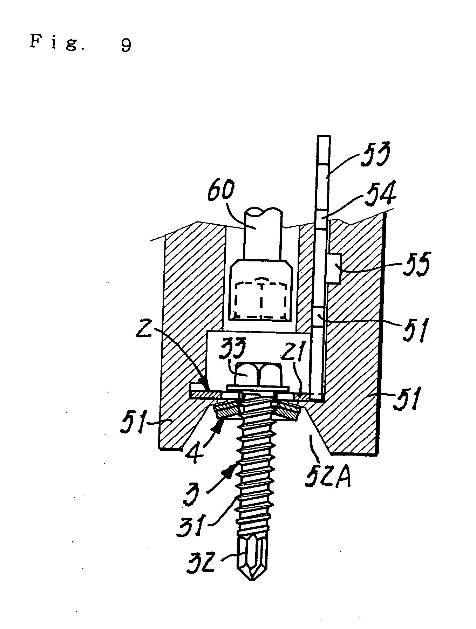

Fig. 7 to Fig. 9 show other preferred embodiment of the screw coupling strip 1 of the present invention. In this preferred embodiment, the screw holding part 23 provided in the screw holding belt 2 is formed nearly on a same plane as the belt main body 21. That is, the four support pieces 25 forming the screw holding part 23, and an insertion hole 27 for inserting and holding the screw shaft part 32 are formed on a same plane by blanking out the belt main body 21. Therefore, the seal washer 4 assembled in the screw shaft part 31 of the drill screw 3 inserted and held in the screw holding belt 2 is disposed adjacently to the downside of the screw holding belt 2. Thus, if the seal washer 4 is adjacent to the downside of the screw holding belt 2, as shown in Fig. 9, when the screw coupling strip 1 is assembled in the belt guide 50 of the continuous screw tightening machine, by increasing a space passage 52A formed between both guide parts 51, 51 of the belt guide 50, the seal washer 4 does not interfere with the both guide parts 51, 51, and the intermittent feed is not disturbed.

## Claims

1. A screw coupling strip used in a continuous screw tightening machine comprising:
a screw holding belt (2) having intermittent feed notches (22) provided at specified pitches along the lateral edge of a belt main body (21) made of a belt-like body of synthetic resin, and having screw holding parts (23) provided at same pitches as the intermittent feed notches in the longitudinal direction of the belt main body,
a drill screw (3) having a screw shaft part (31) inserted in the screw holding parts (23), and having a screw head part (33) held passably in the screw holding parts (23), and
a washer (4) assembled in the screw shaft part (31) inserted in the screw holding parts (23),
wherein the holding belt (2) is disposed between the screw head part and the washer.

2. The screw coupling strip used in a continuous screw tightening machine of claim 1, wherein an interval for allowing the screw coupling strip to pass through a belt guide part (51) of the continuous screw tightening machine is provided between the downside of the screw holding belt (2) and the washer (4).

3. The screw coupling strip used in a continuous screw tightening machine of claim 1 or 2, wherein the washer (4) is a seal washer having a sealing member (42) adhered to a metal washer (41).
